# EUROPEAN PATENT SPECIFICATION

(11) **EP 4 193 435 B1**
(45) Date of publication and mention of the grant of the patent: **03.07.2024**
(21) Application number: 21732027.4
(22) Date of filing: 11.06.2021
(51) Int. Cl.: H02B 1/056, H02B 1/04, H02B 1/20, H02G 5/00, H01H 71/08

(54) **KIT USED FOR AUTOMATED ASSEMBLING OR DISASSEMBLING OF LAMINATED ELECTRIC CIRCUITS**
KIT FÜR DIE AUTOMATISIERTE MONTAGE UND DEMONTAGE VON MEHRSCHICHTIGEN ELEKTRISCHEN SCHALTUNGEN
KIT POUR LE MONTAGE ET LE DÉMONTAGE AUTOMATISÉ DE CIRCUITS ÉLECTRIQUES STRATIFIÉS

(43) Date of publication of application: 14.06.2023
(73) Proprietor: DUPLICO d.o.o., 10436 Kalinovica (HR)
(72) Inventor: RENDULIC, Zeljko, 10000 Zagreb (HR)
(74) Representative: Bihar, Zeljko
(86) International application number: PCT/EP2021/065738
(87) International publication number: WO 2022/258191

(56) References cited:
- WO-A1-96/15577
- US-A1- 2008 024 959

## Description

### Technical Field

The present invention relates to a kit used for automated assembling or disassembling of laminated electric circuits. The main technical field, to which the cited invention belongs, is oriented toward the installation of busbars and electric elements thereto. More particularly, the cited invention relates to laminated busbars, in which a conductive material, i.e., the kit parts according to the invention, are applied to the layered insulating supports in such a manner to form the desired conductive patterns within the layers of line conductors sandwiched within insulating supports.

### Technical Problem

Distribution boards, used in electric cabinets, are well known in the art. Such boards, with corresponding wirings, are installed for electrical power distribution and electric circuit protection everywhere, equipped mainly with circuit breakers, fault current circuit breakers and similar electric elements already known in the art.

The main technical problem observed in producing such distribution boards is that assembly process still requires substantial manpower which is hard to be automatised. In practice, said boards normally contain top-up profile mounting rails on the back of the housing, onto which the switching devices are snapped. The switching devices are connected one to another phase-by-phase via suitable electrical conductors, i.e., busbars, where one busbar is being used for each single-phase device. So-called busbar blocks are being used for polyphase applications. The housing of the said electric cabinets therefore comprises a number of cable ducts and plenty of conductors inserted into the cable ducts, with connecting lugs being provided on the mentioned conductors. Said conductors are inserted into connecting terminals on the switching devices and are clamped firmly with it. Substantial number of conductors and the corresponding contacts produce a complex mesh which can be tracked, assembled, and disassembled only by using the substantial manpower and due care of the personnel included in the wiring process.

The present invention solves the above cited technical problem of standardisation, by using a kit of elements together with the prefabricated insulating sheets and plate-like line conductors which form laminated electric circuits to which the electric elements are fixed. Said kit of elements enable different layers to be electrically connected in the desired manner as well as the electric elements to be connected thereto. The said kit parts are designed in a way that minimal set of elements are used, and that the elements are suitable for automated assembling or disassembling. In that way, a complex mesh of conductors is replaced with the wiring that is analogue to already known multilayer printed circuits, with the provision that all mechanical contacts are made by the kit elements connected one to another and/or further connected to the used line connectors and electric elements. Such solution offers a wiring mesh that is almost without connecting lugs, where used electric elements are specifically designed to cooperate with the said kit. In addition, the mentioned wiring types offer a low contact resistance and excellent temperature endurance of their contact points.

The person skilled in the art will immediately recognize the necessity that third party electric elements are connected somehow to the above-described (closed) system of elements. This technical problem is solved with the present invention by specific sockets designed to receive the 3^{rd} party electric elements, and to provide connecting interfaces with the said laminated electric circuits. Said sockets are designed to allow automated assembling or disassembling to/from the laminated electric circuit. In addition, the said sockets allow corresponding 3^{rd} party electric elements to be inserted/ejected within the said sockets in an automated way.

The automated assembling or disassembling process, as used hereby, means the process where industrial robots are used without manpower. Semi-automated process is the process where manpower is needed only for some limited number of operations.

### State of the Art

A number of prior art documents partially address the subject matter the present invention solved.

The European patent published as EP 2724596 B1 for the invention BUS APPARATUS FOR USE WITH CIRCUIT INTERRUPTERS OR OTHER DEVICES and filed in the name of Labinal LLC [US], teaches about the laminated electric circuits formation, the way insulating layers and plate-like line conductors are formed and interconnected, and the way the number of circuit interrupters and other electric elements are connected thereto. The system as presented in '596 document is not versatile, any changes are almost impossible to be performed. The cited `596 solution seems to be silent regarding the non-standard elements usage, i.e., 3^{rd} party elements used with it.

The European patent application published as EP 1296431 A2 for the invention BUS BAR ASSEMBLY and filed in the name of ABB Patent GmbH [DE], teaches about the connection of outer elements, such as input lines, to already prepared laminated electric circuits - busbars. The cited patent application discloses a versatile way the desired contact point is achieved at any depth of the said laminated busbar, via the conductor equipped with elastic member that fits the desired hole around the said contact point. In addition, the plug which connects two conductive layers of the said laminated busbar is also disclosed. The comparative advantage of '643 solution over the prior art can be seen as simplification of the whole wiring process with the possibility to access any laminated line conductor within the laminated structure. The cited solution has weakness regarding the quality of established contacts and the flexibility of the said solution is still questionable.

The Japanese patent application published as JP 2012095472 A for the invention POWER CONVERSION DEVICE and filed in the name of Mitsubishi Electric Corporation [JP] and Toshiba Mitsubishi Elec. Inc. [JP], discloses a screw connection used to electrically connect the electric elements of the power converter with the laminated electric circuit.

Similarly, the Japanese patent published as JP 3550970 B2 for the invention POWER CONVERTER, AND MULTILAYER CONDUCTOR AND ELECTRIC COMPONENT CONNECTOR and filed in the name of Hitachi Ltd. [JP], discloses again a screw connection used to electrically connect the electric elements of the power converter with the laminated electric circuit. Both solutions, i.e., '472 and '970, discloses a permanent screw connection of the elements to the laminated board, which is known in the art, and which does not address the problems of interconnections among the laminated electric circuits layers and automated assembly/disassembly issues.

The U.S. patent published as US 6,002,580 for the invention CIRCUIT BREAKER POWER DISTRIBUTION PANEL and filed in the name of Power Distribution Products Inc. [US], teaches about the circuit breakers or similar elements removable connection with the laminated electric circuit situated within the power distribution panel. The solution cited in '580 offers fast and reliable connections but remains silent regarding the problems of interconnections among the laminated electric circuits layers and automated assembly/disassembly issues.

The European patent application published as EP3555980A1 for the invention METHOD OF MANUFACTURING A MULTI-PHASE BUSBAR AND ARRANGEMENT FOR ARRANGEMENT FOR CARRYING OUT THE METHOD and filed in the name of ABB Schweiz AG [CH], teaches about laminated busbar structure formation that is, as all the prior art above, permanent, and in this case additionally filed with the resin that renders such solution hard to be disassembled.

U.S. patent application US 2008/024959A1 for the invention ADHESIVELESS DC BUS SYSTEM AND METHOD FOR MANUFACTURING, filed in the name of ROCKWELL AUTOMATION, Inc., [US] discloses yet another variant of the laminated structure used for forming the layered bus.

Finally, the international patent application WO96/15577A1 for the invention LAMINATED BUS ASSEMBLY AND COUPLING APPARATUS FOR A HIGH POWER ELECTRICAL SWTICHING CONVERTER, filed in the name of KENETECH WINDPOWER Inc. [US], seems to be the closest prior art. The laminated structure is depicted in Figure 2 and the way of making contacts in Figure 5 of the same document. However, the said document does not reveal the elements forming the kit in the manner disclosed herewith. The cited prior art documents do not solve the technical problems such as laminated electric circuits formation by using kit elements that help automated assembling or disassembling of the formed laminated structures, such as distribution panels and elements attached thereto.

### Summary of the Invention

The present invention discloses a kit used for automated assembling or disassembling of laminated electric circuits and the corresponding electric elements connected thereto. The laminated electric circuit is based on two or more insulating sheets and a plurality of line conductors sandwiched between each of two adjacent insulating sheets. Optionally, a set of insulating spacers, with thickness close to the said line conductors, are situated on the same layer for fortifying the structure. The whole laminated electric circuit is mechanically tightly fastened once being formed.

Each line conductor, from the same layer, has at least one line which ends with the line connector equipped with the central bore for forming the electric contact with other kit elements. One or more electric elements, or optional 3^{rd} party electric elements that are previously inserted in sockets, are electrically and mechanically connected to the said laminated electric circuit. This is performed in a way that their electric contacts are connected via the said kit elements to the desired line conductors situated within the mentioned laminated electric circuit.

The disclosed kit comprises the elements listed below:
(i) Jumpers, where each jumper has the jumper line of arbitrary width, equipped with two or more jumper connectors, where each jumper connector is equipped with the central bore for forming the electric contact with other kit elements distributed over the same layer.
(ii) Insert nuts, for receiving compatible kit's screws, where each insert nut has the contact surface dimensioned to receive a line connector or a jumper connector.
(iii) Step bushings, where each step bushing is dimensioned for receiving a line connector or a jumper connector with its contact surface, and that is equipped with a bore for free screw passage.
(iv) Bushings, where each bushing has a bore for free screw passage.

Insert nuts, step bushings and bushings are of the same height when are used at the same layer. Said kit elements have one or more rotation stoppers formed on their outer surfaces that nests in the corresponding insulating layer, preventing the said kit elements to rotate.
(v) Threaded head screws, where each threaded head screw has the thread formed in the head to receive a connecting screw by which an electric element or a socket is fastened thereto.
(vi) Cylinder head screws, where each cylinder head screw has the cylindrical head with the fastening groove for receiving a snap fastener of desired electric element.

Each threaded head screw shank or cylinder head screw shank has the thread for fastening the said screw into the insert nut and with the length of the said shank dimensioned to receive n, n≥1, bushings or step bushings between the nut and the head stoper.
(vii) Screw plugs, where each screw plug has at least partially threaded shank for fastening the said screw plug into the said insert nut. The corresponding shank is dimensioned to receive n, n≥1, bushings or step bushings between the nut and the flat head of the said screw plug.
(viii) Connecting screws, where each connecting screw has at least partially threaded shank for screwing the said connecting screw into the threaded head screws.
(ix) Optionally, the kit comprises one or more same or differently formed sockets. Each socket is equipped with the electro-mechanical mechanism designed for easy inserting and ejecting a 3^{rd} party electric element from it. Also, each socket enables that inserted 3^{rd} party electric element has a locked mechanical position and a good electric contact with the laminated electric circuit via threaded head screws designed to hold the said socket and the said electric element.

The insert nut is designed to form electric contact with the line connector or jumper connector in a way that its contact bore has the geometry that matches the outer geometry of the threaded cylinder formed within the insert nut, and where the distance from the contact surface to the top of the nut is dimensioned according to the line connector or the jumper connector thickness. Similarly, the step bushing is designed to form electric contact with the line connector or the jumper connector in a way that its contact bore has the geometry that matches the outer geometry of the cylinder formed within the step bushing, and where the distance from the contact surface to the top of the step bushing is dimensioned according to the line connector or the jumper connector thickness. In one variant of the invention, all kit's step bushings and normal bushings, e.g., contactless bushings, have the same height, and where the corresponding contact or jumper bore geometry is chosen to be the simplest one - circular.

Each threaded head screw is equipped with the drive formed on the top of the head that has machined thread formed in the said head. The said drive enables screwing and unscrewing of the said threaded head screw into the insert nut. Each cylinder head screw is equipped with the drive formed on the top of the head, where the said drive enables screwing and unscrewing of the said cylinder head screw into the insert nut. Likewise, each screw plug is equipped with the drive formed in the flat head, where the said drive enables screwing and unscrewing of the said screw plug into the selected insert nut.

In the preferred embodiment, the socket's casing is dimensioned to receive a dedicated 3^{rd} party electric element. The casing has the set of holes distributed in pairs over it. Screw holes enable the socket to be fastened, via the pair of connecting screws inserted through the said screw holes, to the corresponding threaded head screws emerging from the laminated electric circuit. Assembly holes enable on-top tool manipulation with the element inserting levers during the mounting/dismounting of the electric element within the socket. Contact ejecting holes are holes through which the said element inserting levers are ejected or retracted. Activating pin holes are holes through which the activating pins are protruding in the mechanical contact with the electric element.

The electro-mechanical mechanism is composed from the activating pins, element inserting levers, pins, contact parts, and springs. Inserting of the electric element into the socket engages the activating pins which push springs towards the bottom of the said socket and rotate the pair of element inserting levers, fixed via their pin receiving portions, over the corresponding pins. This action causes the element inserting levers to protrude through ejecting holes and to enter the electric element contact holes to be fixed into with the electric element screws. The said element inserting levers are in the permanent electric contacts, via the elastic contacts, with their corresponding contact parts. Said contact parts are electrically connected to the threaded head screws and therefore with the laminated electric circuit as well.

In the preferred embodiment, the said kit elements (i)-(ix) are used for automated or semi-automated assembling or disassembling of the laminated electric circuits. In yet another variant, automated assembling or disassembling of the laminated electric circuits is performed via industrial robots in a way that is well known in the art.

### Description of Figures

Figure 1 depicts an electric element, the circuit breaker, connected to the laminated electric circuit.
Figure 2 depicts the side view of the situation shown via Figure 1.
Figure 3 shows the inner structure of laminated electric circuit and the corresponding circuit breaker connected thereto.
Figure 4 shows the situation depicted via Figure 3, but without the circuit breaker.
Figure 5 reveals layer-by-layer striping of the laminated electric circuit to reveal the kit's parts used and intralayer contact formation.
Figure 6 shows two conducting line connections, where each line emerges from different laminated electric circuit layer, connected via the step bushing, the screw plug, and the insert nut. Figure 6A shows all elements used for the identical connection in the exploded view.
Figure 7 shows two conducting line connections, where both lines emerge from the same laminated electric circuit layer, connected via the corresponding jumper. Figure 7A shows all elements used for the identical connection in the exploded view.
Figure 8 shows how outer electric elements are connected to the desired conducting line connection, situated at some laminated electric circuit layer, where the connection is performed by the threaded head screw and several bushings used. Figure 8A shows all elements used for the identical connection in the exploded view.
Figure 9 shows how outer electric element can be connected to two conducting line conductors, where each conducting line is situated at the different laminated electric circuit layer, where the connection is performed by the threaded head screw and several bushings used. Figure 9A shows all elements used for the identical connection in the exploded view.
Figure 10 shows how outer electric element can be connected to some desired conducting line connection situated at the bottom of the said laminated electric circuit, i.e., close to the insert nut. The connection is performed by the threaded head screw and several bushings used at each laminated layer. Figure 10A shows all elements used for the identical connection in the exploded view.
Figures 11A, 11B and 11C depict the insert nut, the step bushing, and the standard bushing, respectively.
Figures 12A, 12B, 12C and 12D depict the threaded head screw, the cylindrical head screw, the screw plug, and the connecting screw, respectively. All screws can be formed of various heights (h) and widths as well.
Figures 13A and 13B depict the line conductors of various widths (w) together with the corresponding line connector compatible with the above cited kit elements.
Figures 14 shows the jumper which can be of various lengths (D) and widths (w), and which is compatible with the above cited kit elements.
Figure 15 shows the installation terminal block, i.e., the electric element, suitable to be fastened to cylindrical head screws. Figure 16, depict the perspective view of the said installation terminal block when is fastened, and Figure 17 shows the side view of the same situation.
Figure 18 depicts 3^{rd} party electric element, i.e., circuit breaker and the corresponding socket in the position to receive the said element. Figure 19 shows the perspective view of the situation when the 3^{rd} party electric element is inserted into the said socket. Figure 20 shows the socket with its mechanism in position once the 3^{rd} party electric element is inserted.
Figure 21 shows the side view of the 3^{rd} party electric element inserted in the socket. Figure 22 shows the perspective vie of the socket with the 3^{rd} party electric element ejected. Figure 23 depicts socket's mechanism side view when the 3^{rd} party electric element is inserted in it, as depicted in Figure 21. Figure 24 depicts socket's mechanism side view when the 3^{rd} party electric element is not present within the said socket, as depicted in Figure 22.

### Detailed Description of the Invention

The present invention relates to a kit used for automated assembling or disassembling of laminated electric circuits. The person skilled in the art will recognise the necessity for elements standardisation if one has intention to perform automated assembling or disassembling of the electric circuits, especially laminated electric circuits.

### Kit elements

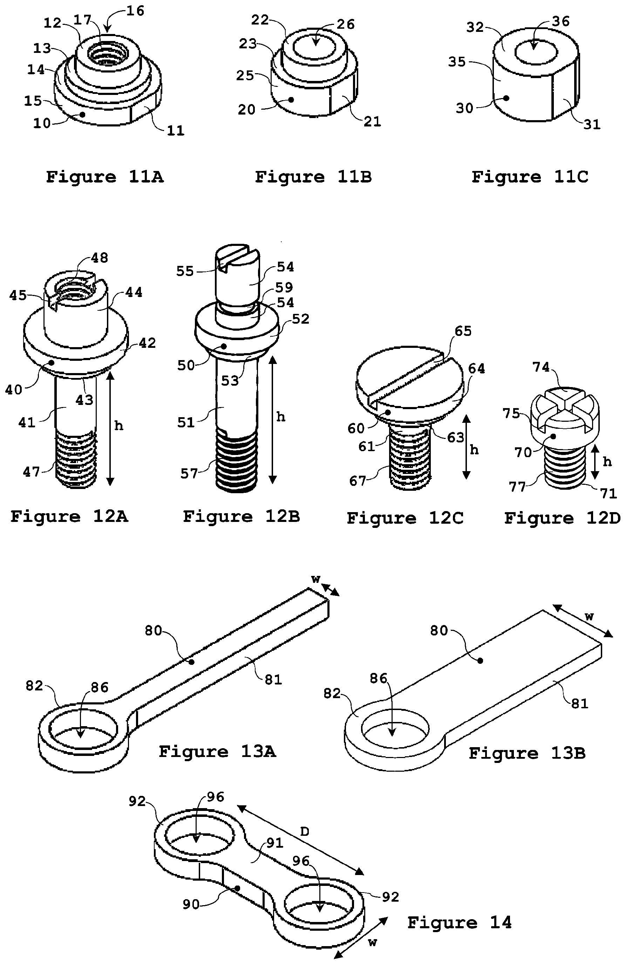

Figure 11A depicts the insert nut (10). The insert nut (10) is, in the preferred embodiment, formed as the rotational body, with the rotation stopper (11) formed at the part of outer cylindrical surface (15) which is formed near the bottom of the said nut (10). In the preferred embodiment, the rotation stopper (11), Figure 11A, is formed as a rectangle surface perpendicular to the base of the said insert nut (10). In other variants, two, or even more surfaces can be machined on the cylindrical surfaces, for instance, in the form of hexagonal nut.

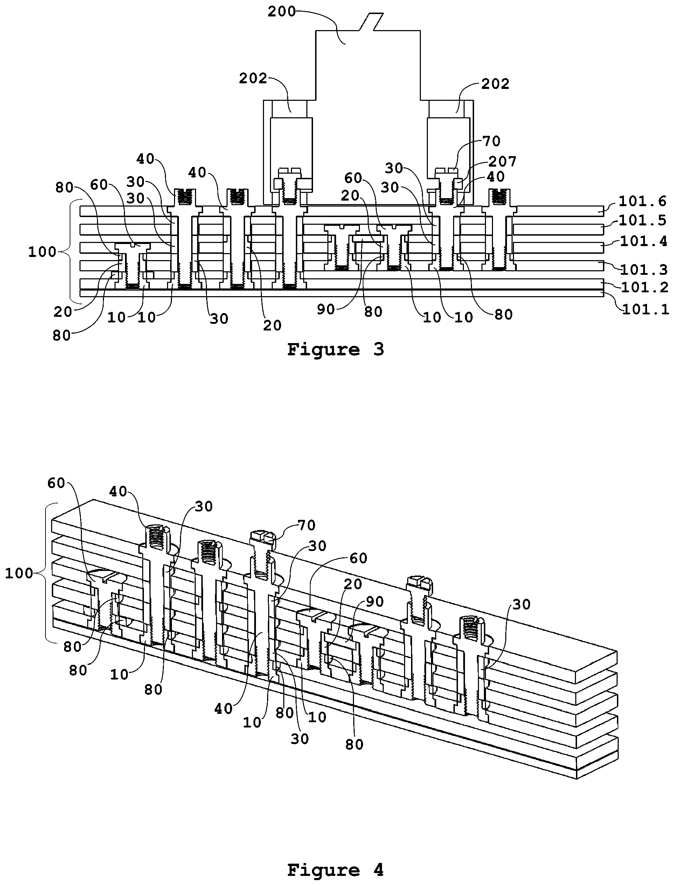

The nut (10) is further equipped with the contact surface (13) and the stopping step (14). Stopping step (14) allows the said nut (10) to be nested in the desired insulating sheet (100.i) once being covered, for instance, in a way depicted in Figure 3. Namely, the diameter of the bore formed in the corresponding covering insulating sheet (100.i) is smaller than the stopping step (14) and the said bore has a diameter and of the contact surface (13). So, the stopping step (14) prevents the nut (10) to propagate through the covering insulating sheet (100.i) once the corresponding screws (40, 50, 60) are screwed into the said nut (10).

In one variant, the nut (10) is machined without the stopping step (14), and the contact surface (13) spread up to the outer surface (15). In this variant, the diameter of the bore formed in the corresponding covering insulating sheet (100.i) is equal to the diameter of the outer surface (15), machined in the way to match with one or more rotation stoppers (11). In this variant, the nut (10) will not be able to fasten different layers as in the variant above but will allow easier machining of the insulating sheets (100.i) without steps within the bores made on insulating sheets (100.i).

Once the insert nut (10) is in assembly process covered within the insulating sheet (100.i), it is locked in its place via the stopping step (14), or via the other elements connected to the nut (10), as in variant where the stopping step (14) is absent.

One or more stoppers (11) prevent any rotation of the said nut (10) during the screwing of the screws (40, 50, 60). The contact surface (13) is designed to establish a contact with the connectors (82, 92) formed at the end of the lines (81, 91), i.e., at the end of line conductors (80) or jumpers (90). The contact surface (13) is the step where connectors (82, 92), depicted on Figures 13A, 13B and 14, simply seat. Contact bores (86, 96) are designed to easily receive threaded cylinder (12), equipped with the inner thread (17) and into which compatible screws (40, 50, 60) are screwed by inserting its threads into the hole (16). For the person skilled in the art, it is obvious that the used screws (40, 50, 60) can be of different heights and with diameters that match the used nut (10) inner diameter.

The person skilled in the art will immediately recognise that all outer nut's surfaces can be machined also as a polygonal shape. In that sense, even the connectors (82, 93) and the corresponding contact surface (13) can be machined as the polygons that match each other. However, the simplest geometry for machining and assembly is the circular geometry.

Figure 11B depicts the step bushing (20). The step bushing (20) is mainly formed as the rotational body, with one or more rotation stoppers (21), formed at the part of outer cylindrical surface (25). The role of one or more stoppers (21) are the same as in previously described inset nut (10) and can be equally machined. The step bushing (20) is further equipped with the contact surface (23). Role of the contact surface (23) is identical to the role of the contact surface (13) formed on the nut (10). Contact bores (86, 96) are designed to easily receive the hollow cylinder (22), which is equipped with the bore (26) through which various screws (40, 50, 60) can pass without obstruction. As previously stated, the person skilled in the art will immediately recognise that all outer step bushing's surfaces can be machined also in a polygonal shape, as well as corresponding the connectors (82, 92).

Figure 11C depicts the bushing (30). The bushing (30) is mainly formed as the rotational body (32), with one or more the rotation stoppers (31), formed at the cylindrical surface (35), with the previously described technical role. The bore (36), formed across the said bushing (30), is designed so that various screws (40, 50, 60) can pass through it without obstruction.

Figure 12A depicts the threaded head screw (40) with the shank (41) that has a thread (47) compatible with the nuts (10), where the said shank (41) is of an arbitrary height (h). In one variant of the invention, the said screw (40) has a stepped neck (43) that connects the said shank (41) and the head stoper (42). The head (44) is formed as a cylindrical body over the head stoper (42). The head (44) is equipped with the inner thread (48), capable to receive the corresponding connecting screw (70) and is equipped with the drive (45) for screwing the said screw (40) into the nut (10).

Figure 12B depicts the cylindrical head screw (50) with the shank (51) that has a thread (57) compatible with the nuts (10), where the said shank (51) is of an arbitrary height (h). In one variant of the invention, the said screw (50) has a stepped neck (53) that connects the said shank (51) and the head stoper (52). The head (54) is formed as a cylindrical body over the head stoper (52). The head (54) is equipped with the fastening grove (59), capable to interact with a snap fastener (209) of desired electric element (200), and with the drive (55) for screwing the said screw (50) into the nut (10).

Figure 12C depicts the plug screw (60) that has a threaded shank (61) of an arbitrary height (h), with a thread (67) for screwing into the insert nut (10) and where the said shank (61) is of an arbitrary height (h). In one variant of the invention, the said screw (60) has a stepped neck (63) that connects the said shank (61) and the flat head (64) equipped with the drive (65).

When the above cited screws (40, 50, 60) are machined with stepped necks (43, 53, 63), said stepped necks have the same technical role as the stopping step (14), machined on the nut (10), has. Namely, the stepped necks (43, 53, 63) allow the screws (40, 50, 60) to fasten corresponding insulating sheet (100.i) with this stepped portion once the screws are screwed into the corresponding nuts (10), as depicted on Figures 3 and 4. If the above cited screws (40, 50, 60) are machined without stepped necks (43, 53, 63) then the diameter of the bore formed in the corresponding covering insulating sheet (100.i) is equal to the diameter of the used head stoppers (42, 52) or flat heads (64). In this variant, the screws (40, 50, 60) will not be able to fasten different layers as in the variant above - but will allow easier machining of the used insulating sheets (100.i).

Figure 12D depicts the connecting screw (70) which has a thread (77), made on the shank (71), which fits the head thread (48) formed in the threaded head screw (40). Said connecting screw (70) has a head (74) and the corresponding drive (74) formed thereto.

The person skilled in the art will immediately recognize that the only dimensional requirement imposed to the screws (40, 50, 60) is the inner thread (17) formed in the insert nut (10). All other dimensions are arbitrary and can be selected according to the needs for use in different insulating sheets.

Figures 14 depicts the jumper (90), formed with two bores (96) at its connectors (92), where the said connectors (92) are connected with the jumper line (91) of an arbitrary length (D). The person skilled in the art will immediately extrapolate this design regarding the lengths (D), the widths (W) and the number of connectors (92) that are present. The jumper (90) can be equipped with three or more connectors (92), distributed in the same line, or in any other convenient geometry, such as zigzag. Jumper (90) thickness depends on used kit elements and other technical needs.

Figures 13A and 13B depict various line conductors (80), i.e., of various width (w), and its end connectors (82) formed at the end of the corresponding lines (81). Such endings, i.e., connectors (82) forms inputs/outputs for the complex mesh made from conductors (80) of various topologies and schemes within each laminated layer. Each connector (82) is equipped with the contact bore (86) that fits over the hollow cylinders (12, 22) formed on the nuts (10) and step bushing (20) respectively. Said line conductors (80) and the corresponding elements (81, 82) do not constitute the kit's elements (10, 20, 30, 40, 50, 50, 70), with which are compatible.

All above cited kit's elements (10, 20, 30, 40, 50, 60, 70, 90) and the corresponding line conductors (80) are, preferably, formed from metals having good electric and thermal properties, such as aluminium, copper, and their alloys. In one further variant, the nut (10) can be formed from an insulating material, if necessary, having in mind that such choice will certainly improve the insulating properties of whole insulating sheets where said nuts (10) are used.

### Laminated electric circuits formation

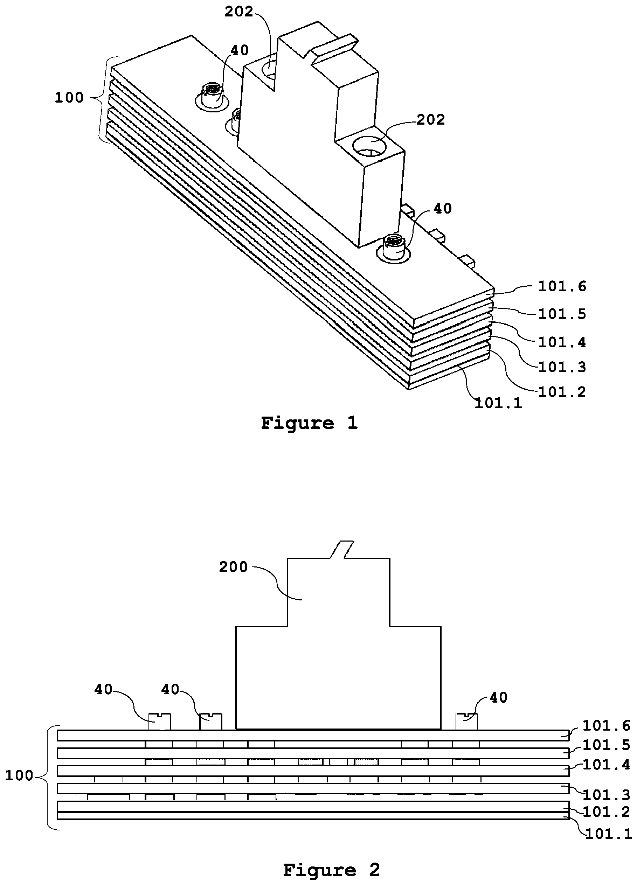

Good example of the laminated electric circuits is depicted via Figures 1-5. Laminated electric circuits (100), used in electric cabinets, usually consist of two or more insulating sheets (101.i), i= 1, 2, ... n. In general, the said insulating sheets can be of the same or different thickness. The number of insulating sheets (101.i) depends on the circuit complexity, number of phases used, etc. In general, insulating sheets (101.i) are made of materials that are common in the related art of manufacturing PCBs (Printed Circuit Boards) having good insulating properties. The person skilled in the art will select the appropriate insulating material according to the thermal requirements. In contrast to the standard low current and low voltage PCBs, which are manufactured with already deposited line conductors on in, for the electric cabinets special line conductor (80) mesh is designed and sandwiched between said insulating sheets (101.i, 101.i+1). The example of such solution can be found in EP2724596B1, cited hereby in the prior art. When line conductors (80) are not distributed uniformly over the insulating sheet (100.i), it is necessary to distribute a set of insulating spacers, with thickness close to the said line conductors (80), possibly around the said line conductors (80) to form laminated electric circuit layer more solid and compact. The thickness of the used line conductors (80) depends mainly on maximum current that are projected to flow across them, kind of used conductors, i.e., Cu or Al, and the heat dissipation requirements that should be satisfied, which is well known in the art.

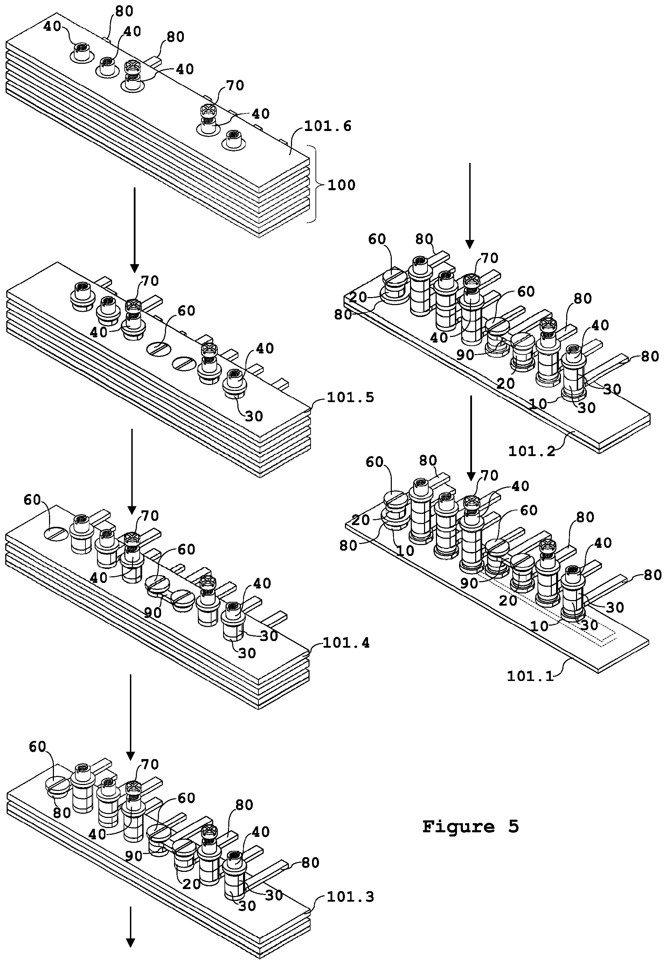

In practice, the automated assembly begins from the initial layer, i.e., insulating sheet (100.1) that has the dimension which surpass the dimension of all line conductors (80) mesh used. On that insulating sheet the bottom kit elements, such as insert nuts (10), are placed. Then, a tailored insulating sheet (100.2), see Figures 4 and 5, with spaces designed for nesting the nuts (10) is placed directly over the first insulating sheet (100.1). All insert nuts (10) are equipped with the rotation stopers (11) which prevents the said nuts to rotate once being embedded in the insulating sheet (100.2). Then the first layer of line conductors (80) is deployed on the said insulating sheet (100.2), optionally with the insulating spacers distributed around, if needed. Some of the said line conductors (80) are connected to the insert nuts (10) in a way we will discuss later. Then, the next tailored insulating sheet (100.3) is deposited. Sad insulating sheet (100.3) has, in one variant, bores and nests. Bores are designed for receiving step bushings (20) or bushings (30), while the nests are designed for receiving insert nuts (10). In this variant, where nuts (10) have stopping steps (14), the bores and nests are not the same. The nests prevent the insert nuts (10) to pass the insulating sheet (100.i) which covers the nuts (10) once being nested into during the screwing the screws (40, 50, 60). In another variant of the invention, where the insert nuts (10) are formed without stopping steps (14), the bores and nests formed in the insulating sheet (100.i) are equal. Each bore/nest has a part for receiving rotation stoppers (11, 21, 31) to prevent *in situ* rotation of the corresponding elements (10, 20, 30).

It is obvious for the person skilled in the art how to use the insulating films, formed from insulating paper or other convenient materials, in order to insulate various lines (81) one from another within the said laminated structure (100) connection points, i.e, close to the corresponding bores (82), if necessary. This insulation is supposed to be furnished advance to automatic, or semi-automatic assembly of the cited laminated structure.

Then again, the second layer of line conductors (80) is deployed on the said insulating sheet (100.3) where some of the said line conductors (80) are connected to the insert nuts (10) or step bushings (20) in a way we will discuss later.

In the same way explained above, the structure grows, new tailored insulating sheets (100.i, 100.i+1, ...) are added as well as the corresponding line conductors (80) sandwiched among each two layers with optionally use of the insulating spacers. When the desired laminated electric circuit is formed, it is mechanically tightly fastened by set of fasteners, preferably by outer screws or elastic ribbons, capable to lock all layers together.

Kit's elements, which are used for automated assembling or disassembling of laminated electric circuits, are the focus of the present invention. The kit elements are those which solves further technical problem the skilled person in the art will encounter in forming the laminated electric circuit via automated, or semi-automated, assembling or disassembling:
A. the way the corresponding line conductors (80), belonging to the same layer, are mutually connected,
B. the way the corresponding line conductors (80) are connected mutually if belongs to different layers,
C. the way the corresponding line conductors (80) are connected with the standard electric elements (200) directly mounted over the laminated electric circuit, and
D. the way the corresponding line conductors (80) are connected with the sockets (400) mounted over the laminated electric circuit, capable to receive the 3^{rd} party electric elements.

In that sense it is instructive to look closer examples in order to understand the role of all kit's elements.

### A. The same layer connection

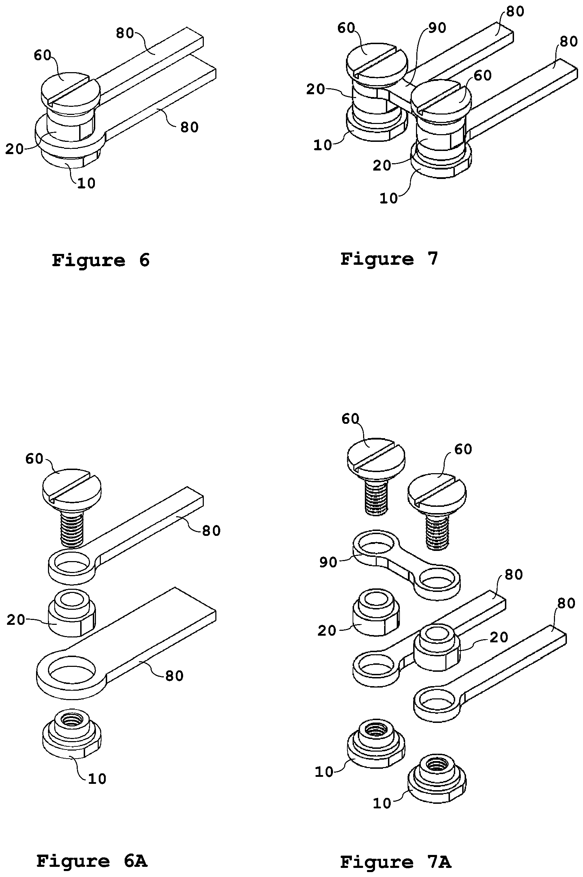

Figures 7 and 7A depict the situation where two line conductors (80) from the same layer have to be connected, where the said layer is not a bottom layer, i.e., the insulating layer (100.2). This situation is possible to observe in the central part of the Figure 3. Two insert nuts (10), one close to another, are nested within the insulating layer (100.3), previously tailored to receive/cover the set two nuts (10), together with other elements. Then the mesh of line conductors (80) is deposed on the layer (100.3), where two line conductors (80) have their connectors (82) equipped with the contact bores (86) that fits the contact surfaces (13) formed on the said insert nuts (10), Figure 7. Then, other connections are formed on the same layer where necessary. Subsequently, new insulating layer (100.4) is deployed. This layer (100.4) is formed, *inter alia,* with bores for receiving step bushings (20) and the corresponding stoppers (21) in positions exactly over the previously deposited insert nuts (10). Over the said step bushings (20), the jumper (90) is deposited in a way to sit with its contact bores (96) on the contact surfaces (23). Finally, the insulating layer (100.5) is deployed, two plug screws (60), which are protruding across the said insulating layer (100.5), the jumpers (90), the bushings (20), the line connectors (82) formed at the end of the said line conductors (80), are finally screwed into the nuts (10). In that way the same layer connection, among the line conductors (80), is established. The screw stepped necks (63) lock the screw plugs (60) into the nests previously prepared on the insulating layer (100.5), as visible on the Figure 4.

Similarly, the other screws (40, 50, 60), i.e., their screw necks (43, 53, 63), are capable to nest in the corresponding insulating layer. The screw (40, 50, 60) once screwed with the desired insert nut (10) reinforces the laminated structure (100) by pressing the stopping step (14) of the corresponding nut (10) towards the said screw neck (43, 53, 63), Figures 3 and 4.

The above can be performed equally well by using nuts (10) in the variant without stopping step (14) and the screws (40, 50, 60) without the corresponding stepped necks (43, 53, 63). In this variant the outer fastening of the laminated structure (100) should be applied more carefully, having in mind that inner reinforcements between stopping steps (14), layers/elements in between, and stepped necks (43, 53, 63) are absent.

### B. A different layers connection

Figures 6 and 6A depict the situation where two line conductors (80) from different layers have to be connected. The same situation is depicted on Figure 4, outmost left position within the laminated structure (100). Layer formation is the same as explain in the case A. above; again the insert nut (10) is nested in the insulating layer (100.2) and the corresponding line conductor (80) mesh is deployed thereto. Wider line conductor (80) with its line connector (82) is put on the contact surface (13) formed on the said insert nut (10). Then, other connections are formed on the same layer where necessary. Then, new tailored insulating layer (101.3) is deployed, and the bushing (20) is positioned over the said line connector (82) in the bore already formed in the insulating layer (101.3). Subsequently, new corresponding line conductor (80) mesh is deployed thereto, where one of its line connectors (82) is put on the contact surface (23) formed on the said step bushing (20). Then, the new layer (101.4) is deployed with tailored nest for receiving the screw (60). Finally, the screw (60) is protruding the said layer (101.4), the upper line connector (82), the bushings (20) situated within the layer (101.3), the bottom placed line connectors (82), and is screwed into the nut (10) nested within the layer (101.2).

The above can be performed equally well by using nuts (10) in the variant without stopping step (14) and the screws (40, 50, 60) without the corresponding stepped necks (43, 53, 63).

The systems described in A. and B. can be used universally. The set of the jumpers (90) can be identical, however, in practice it is obvious that jumpers of several lengths (D) and widths (w), see Figure 14, can be used for various needs. Furthermore, is obvious that stacking more bushings (20) allows that three or even four different layers connections are established, i.e., connections between line conductors (80) deployed on three or more layers.

### C. Dedicated electric elements connections

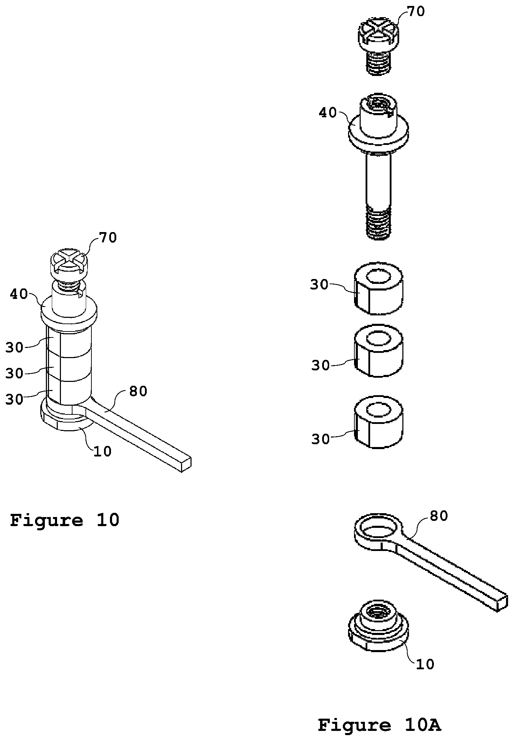

Electric elements (200) connections are more complex. Figures 1 and 3 depict one variant the dedicated electric element (200) is connected to the laminated structure (100), once formed. Firstly, the electric element (200), such as the circuit breaker, should be designed to cooperate with the disclosed kit. So, each electric element (200) has two or more electric contacts (207), situated in a way that these contacts are accessible via the screw holes (202) formed above the said electric contacts (207). The mentioned screw holes (202) enable the specifically designed connecting screws (70) to be inserted through said holes (202) and to fasten the electric contacts (207) to the threaded head screws (40) designed for the said purpose. The thread (77), machined on the connecting screw shank (71) is designed to cooperate with the thread (47) machined in the head (44) of any threaded head screw (40). Basically, screw connection of the connecting screw (70) and the threaded head screw (40) assures good electrical and mechanical connection that can be simply assembled and disassembled, just by screwing, as depicted on the Figure 10 or Figure 10A.

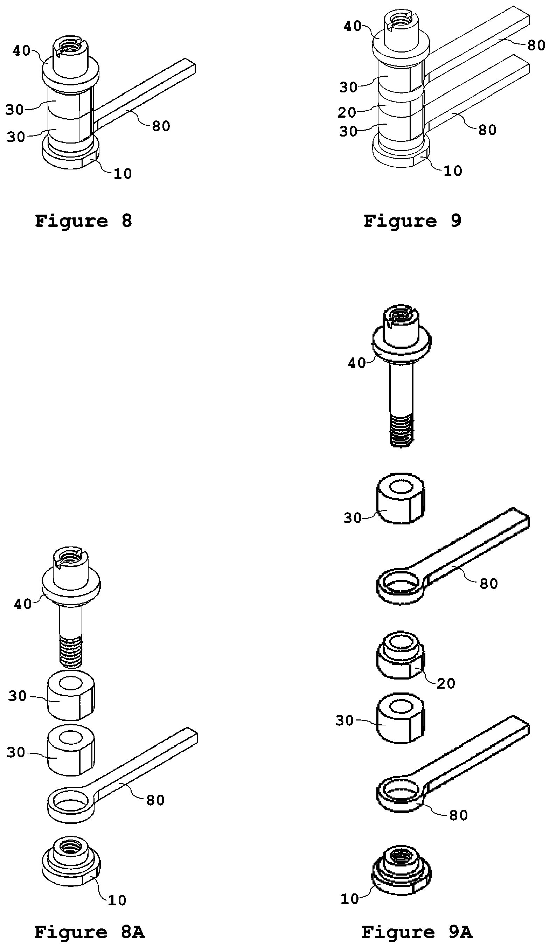

More important is the way a threaded head screw (40) interacts with one or more line conductors (80) disposed on one on more insulating layers (101.i). The example depicted in Figure 8 shows the threaded head screw (40) which is connected to only one line conductor (80) situated three layers below the top surface of the laminated electric circuit (100), to which some electric element (200) can be attached. The exploded view of the same structure is depicted via Figure 8A. The layers formation is already explained in A. and B. sections above, as well as the fastening of the screws to nuts in one or more variants with or without stopping surfaces (14) and stepping necks (43, 53, 63). Hereby, it is important that the line conductor (80) is attached to the insert nut (10) situated at the insulating layer (101.3), outmost right position, as depicted in Figure 3. Two bushings (30), positioned over the said nut (10) are used one over another, one at the insulating layer (101.4) and another at the insulating layer (101.5). Similarly, the case with two line conductors (80) is depicted on the Figures 9 and 9A. In that example, already explained trick with the step bushing (20) and the line conductor (80), learned form A. and B. above, is exploited herby to add an extra line conductor (80) connection with the structure which is tighten via threaded head screws (40) to the bottom insert nut (10).

The person that is skilled in the art will immediately recognise that each threaded head screw shank (41) has the thread for fastening into the insert nut (10) and that the thread head screw shank (41) has the length dimensioned to receive n, n≥1, bushings (20, 30) between the nut (10) and the head stoper (42). So, one or more different threaded head screws (40), which differs only in its height (h), should be used in practicing the said invention. It that sense, it is instructive to compare threaded head screws (40) depicted in Figure 8A where two bushings (30) are used, and one depicted in Figure 10A where three bushings (30) are used between the corresponding head stoper (42) and the used nut (10).

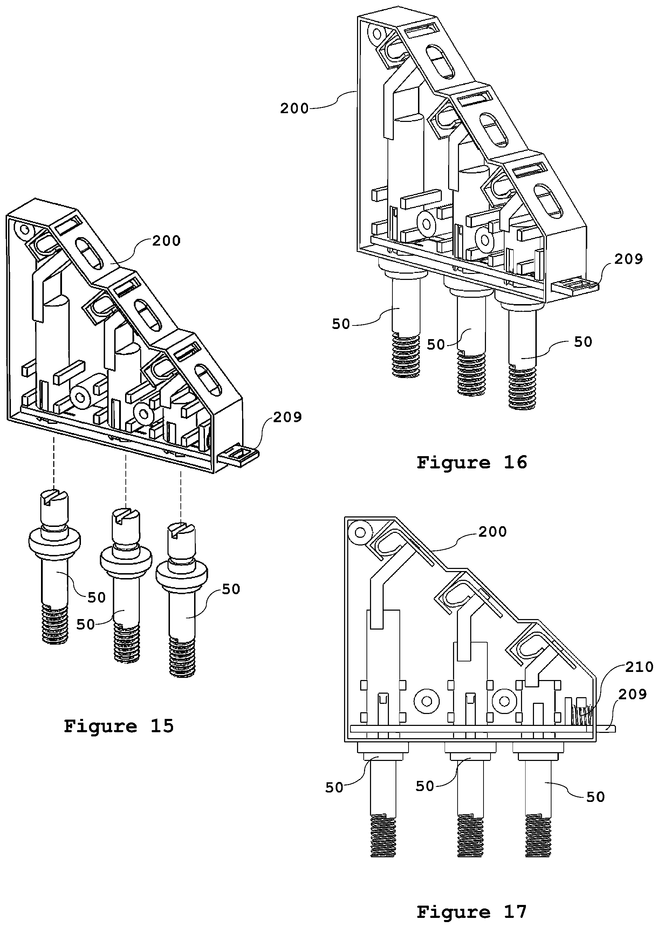

For connecting dedicated electric elements (200) to the already disclosed laminated structure (100), other fastening variants can be equally used. In yet another variant of the said invention, instead of using the threaded head screws (40) shown on the Figure 12A, a cylindrical head screw (50), depicted on the figure 12B, is used. The difference between the said screws (40, 50) is in their head formation. The cylindrical head screw (50) has the same features regarding the connection abilities within the laminated structure (100), as the already mentioned a threaded head screw (40) has. However, the way the cylindrical head screw (50) interacts with the elements (200) is entirely different. The cylindrical head screw (50) has a cylindrical head (54) equipped with the fastening grove (59). Said fastening groove (59) is designed to interacts with the snap fastener (209) formed within the electric element (200), as for instance, depicted via set of Figures 15-17. The installation terminal block (200) has a mechanism that consist of the snap fastener (209) powered with the spring mechanism (210), Figure 17. In one variant, the snap fastener (209) can be partially pulled out from the element (200) which enables the cylindrical heads (54) of the corresponding cylindrical head screws (50) to protrude in the element (200). When the snap fastener is released, the spring retracts it back and the said snap fastener (209) locks cylindrical heads (54) to their fastening groves (59). In that manner the element (200), i.e., the installation terminal block (200) designed to cooperate with the kit according to the invention, is mechanically secured and electrically connected with the laminated electric circuit (100).

### D. Non-standard electric elements connections

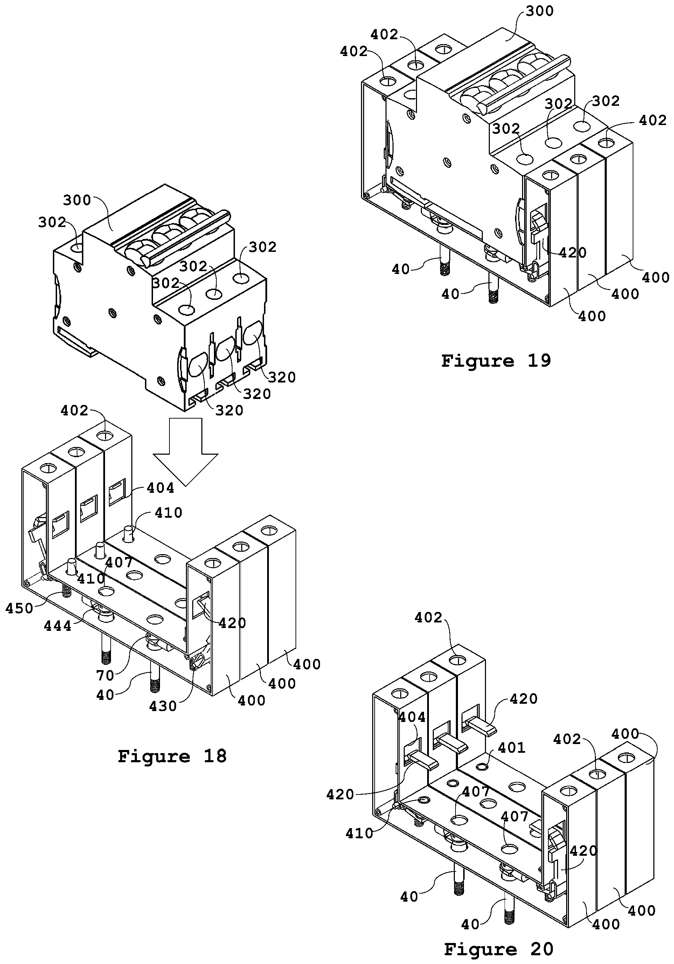

The person that is skilled in the art will immediately recognise that fastening of specifically designed electric elements (200) via the threaded head screws (40) or via the cylindrical head screws (50), as explained in section C., has an important deficiency. Such system is closed and only dedicated, and for this system specifically designed, electric elements (200) are compatible with the said system. In practice, this means that the source of spare parts is limited, and the system is not versatile as should be. To overcome that difficulty, a kind of universal socket (400) is designed, where the said socket is capable to interact with the laminated electric circuit (100) on one side, and to connect, as an interface, the standardised 3^{rd} party electric elements (300) to the said electric circuit (100), see Figures 18-24.

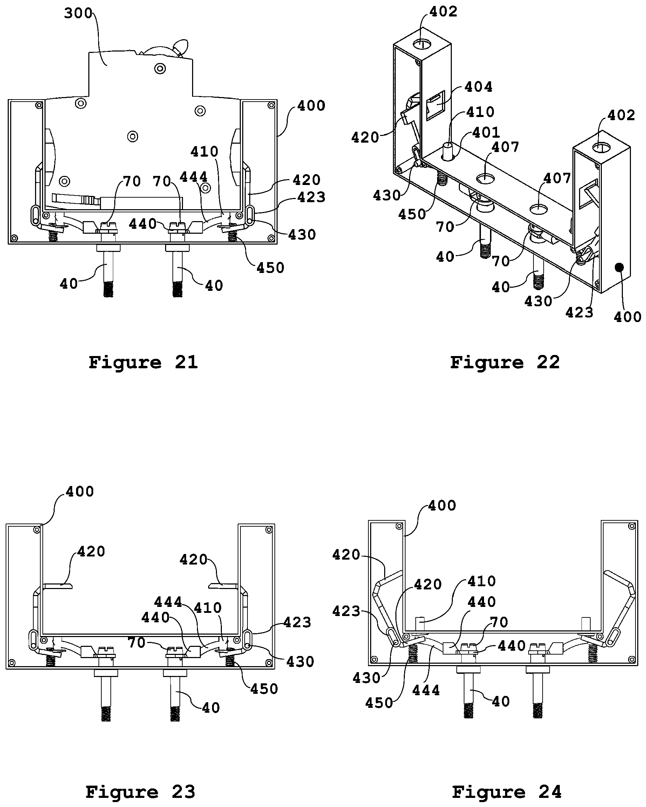

The way the socket (400) is connected to the laminated electric circuit (100) is depicted in Figures 21-24. A pair of threaded head screws (40) are firstly mounted on the laminated electric circuit (100) as explained in the previous sections. Then, the pair of connecting screws (70) that is inserted through the holes (407) formed in the lower part of the socket (400) body - fasten the said socket (400) with the laminated electric circuit (100), both electrically and mechanically.

The socket (400) has the electro-mechanical mechanism developed for receiving 3^{rd} party electric element (300). For simplicity, in this description the variant with the U-shaped socket will be described. However, other socket (400) variants are possible, while are capable of carrying dedicated 3^{rd} party electric elements (300).

The said mechanism is composed from the pair of activating pins (410), element inserting levers (420), pins (430), contact parts (440) and springs (450). The situation before inserting the element (300) is depicted on Figures 22 and 24. The activating pins (410) protrude out from the U-shaped socket (400) casing, through the pair of activating pin holes (401) in the interior of the said socket (400). Each activating pin (410) is spring (450) driven, where the said spring (450) also presses the corresponding element inserting lever (420) to be hidden within the U-shaped casing, Figures 22 and 24. Said element inserting lever (420) is pivotally mounted to the pin (430), enabling the rotation of the lever (420) from the position depicted on Figure 24 to the position depicted on Figure 23. Element inserting lever (420) is also capable to protrude through the contact ejecting hole (404) in the socket (400) interior, Figure 22.

Inserting of the electric element (300) within the socket (400) engages the activating pins (410) which push springs (450) towards the bottom of the socket (400). This action rotates a pair of element inserting levers (420), fixed via pin receiving portions (423) over the corresponding pins (430), causing the element inserting levers (420) to protrude through ejecting holes (404). If the electric element (300) is inserted correctly into the socket (400), the element inserting levers (420) enter the corresponding contact holes (320) of the said element (300). Once the element inserting levers (420) are in the desired holes, the electrical contacts are established via the standard electric element screws that are accessed via the screw holes (302), usually positioned on the element (300) top, and which fasten the said levers (420) within the element (300). In that way, the element inserting levers (420) are in the excellent electric contact with the 3^{rd} party electric element (300). On the opposite side, i.e., within the socket (400), the said element inserting levers (420) are in the permanent elastic and electric contact with the corresponding contact parts (440). Namely, each elastic contact (444), as visible on Figure 24, is connected with its one side to the corresponding element inserting lever (420), and with its another side to the previously mentioned contact part (440). Each contact part (440) is further fixed with the corresponding threaded head screw (40), using the connecting screw (70), and therefore with the laminated electric circuit (100), as well.

A pair of holes (402) formed over the top of the U-casing has double purpose. First is to assist the pushing of the element inserting levers (420) towards the contact holes (320), if necessary, during the insertion of the element (300). The second one, and more important, is that holes (402) serve as the servicing holes in case of disassembly failures. Namely, over the years the springs (450) may weaken and discharging of the element (300) out of the socket (400) can cause non return of the element inserting levers (420) into the U-shaping casing. For that reason, the pair of holes (402) are designed to help in such hypothetical malfunction of the said electro-mechanical mechanism.

### Industrial Applicability

Industrial application of the said invention is obvious. The present invention discloses a kit used for automated assembling or disassembling of laminated electric circuits and the corresponding electric elements connected thereto, preferably using the industrial robots specifically designed for similar purposes. For that use, a high level of unification of the used elements is needed and the present invention discloses such closed system, which is still capable to integrate 3^{rd} party elements into, with high level of flexibility and reliability.

### Reference numbers

- **10**: **Insert nut**
- 11: Rotation stopper
- 12: Threaded cylinder
- 13: Contact surface
- 14: Stopping step
- 15: Outer surface
- 16: Bore
- 17: Thread

- **20**: **Step bushing**
- 21: Rotation stopper
- 22: Cylinder
- 23: Contact surface
- 25: Outer surface
- 26: Bore

- **30**: **Bushing**
- 31: Rotation stopper
- 32: Cylinder
- 35: Outer surface
- 36: Bore

- **40**: **Threaded head screw**
- 41: Shank
- 42: Head stopper
- 43: Neck
- 44: Head
- 45: Drive
- 47: Thread
- 48: Head thread

- **50**: **Cylindrical head screw**
- 51: Shank
- 52: Head stopper
- 53: Neck
- 54: Cylindrical head
- 55: Drive
- 57: Thread
- 59: Fastening groove

- **60**: **Screw plug**
- 61: Shank
- 63: Neck
- 64: Flat head
- 65: Drive
- 67: Thread

- **70**: **Connecting screw**
- 71: Shank
- 74: Head
- 75: Drive
- 77: Thread

- **80**: **Line conductor**
- 81: Line
- 82: Connector
- 86: Contact bore

- **90**: **Jumper**
- 91: Jumper line
- 92: Connector
- 96: Contact bore

- **100**: **Laminated structure**
- 101.i: Insulating sheet; i = 1, 2, 3, ...

- **200**: **Electrical element**
- 202: Screw holes
- 207: Electrical contact
- 209: Snap fastener
- 210: Spring

- **300**: **3^{rd} party electric element**
- 302: Screw hole
- 320: Contact hole

- **400**: **Socket**
- 401: Activating pin hole
- 402: Assembly hole
- 404: Contact ejecting hole
- 407: Screw hole
- 410: Activating pin
- 420: Element inserting lever
- 423: Pin receiving portion
- 430: Pin
- 440: Contact part
- 444: Elastic Contact
- 450: Spring

## Claims

1. A kit configured to be used for automated assembling or disassembling of laminated electric circuits (100) and the corresponding electric elements (200, 300) connected thereto;
- where the said laminated electric circuit (100) is based on two or more insulating sheets (100.i), i=1, ... n, and a plurality of line conductors (80) sandwiched between each of two adjacent insulating sheets (100.i, 100.i+1) with, optionally, a set of insulating spacers having thickness close to the said line conductors (80) situated on the same layer for fortifying the structure, and where the whole laminated electric circuit (100) is mechanically tightly fastened once being formed;
- where each line conductor (80) has at least one line (81) equipped with a line connector (82) having a central bore (86) for forming an Llic electric contact with other kit elements;
- where one or more electric elements (200), or optional 3^{rd} party electric elements (300) that are previously inserted into sockets (400), are electrically and mechanically connected to the said laminated electric circuit (100) in a way that their electric contacts are connected via the said kit elements to the desired line conductors (80) within the said laminated electric circuit (100);
where the said kit comprises the following elements:
- jumpers (90), where each jumper (90) has a jumper line (91) of arbitrary width, equipped with two or more jumper connectors (92), each with a central bore (96) for forming an electric contact with other kit elements (10, 20) distributed over the same layer;
- insert nuts (10) for receiving compatible kit's screws (40, 50, 60), where each insert nut (10) has a Llic contact surface (13) dimensioned to receive a line connector (82) or a jumper connector (92);
- step bushings (20), where each step bushing (20) is dimensioned for receiving a line connector (82) or a jumper connector (92) with its contact surface (23), and with a bore (26) for free screw (40, 50, 60) passage;
- bushings (30), where each bushing (30) has a bore (36) for free screw (40, 50, 60) passage;
where insert nuts (10), step bushings (20) and bushings (30) are of the same height when used at the same insulating layer (100.i), having one or more rotation stoppers (11, 21, 31) formed on their outer surfaces (15, 25, 35) that are configured to nest in the corresponding insulating layer (100.i) and prevent the kit elements (10, 20, 30) to rotate;
- threaded head screws (40), where each threaded head screw (40) has a thread (47) formed in the head (44) to receive a connecting screw (70) by which an electric element (200) or a socket (400) is fastened thereto;
- cylinder head screws (50), where each cylinder head screw (50) has a cylindrical head (54) with a fastening groove (59) for receiving a snap fastener (209) of the electric element (200);
where each threaded head screw shank (41) or cylinder head screw shank (51) has a Llic thread (47, 57) for fastening said screw (40, 50) into the insert nut (10) and with the length of the said shank (41, 51) dimensioned to receive n, n≥1, bushings (20, 30) between the nut (10) and a head stopper (42, 52) of said threaded or cylinder head screw (40, 50);
- screw plugs (60), where each screw plug (60) has an at least partially threaded shank (61) for fastening the said screw plug (60) into the said insert nut (10) and the shank (61) dimensioned to receive n, n≥1, bushings (20, 30) between the nut (10) and a flat head (64) of the screw plug;
- connecting screws (70) where each connecting screw (70) has an at least partially threaded shank (71) for screwing the said connecting screw (70) into the threaded head screws (40); and
- optionally, one or more sockets (400) with an electro-mechanical mechanism designed for easy inserting and ejecting a 3^{rd} party electric element (300) from the said socket (400), where each socket (400) enables that the electric element (300) has a locked mechanical position and a good electric contact with the laminated electric circuit (100) via threaded head screws (40) that hold the said socket (400) and the said electric element (300).

2. The kit according to claim 1, wherein the insert nut (10) is configured to form electric contact with the line or jumper connector (82, 92) in a way that the contact bore (86, 96) has the geometry that matches the outer geometry of the threaded cylinder (12) formed within the insert nut (10) and where the distance from the contact surface (13) to the top of the nut (10) is dimensioned according to the line or jumper connector (82, 92) thickness.

3. The kit according to claim 1, wherein the step bushing (20) is configured to form electric contact with the line or jumper connector (82, 92) in a way that the contact bore (86, 96) has the geometry that matches the outer geometry of the cylinder (22) formed within the step bushing (20) and where the distance from the contact surface (23) to the top of the step bushing (20) is dimensioned according to the line or jumper connector (82, 92) thickness.

4. The kit according to claim 2 or 3, wherein all step bushings (20) and bushings (30) have the same height, and where each contact bore (86, 96) has a circular geometry.

5. The kit according to claim 1, where each threaded head screw (40) is equipped with a drive (45) formed on the top of the head (44) that has machined thread (47) in the said head (44), where the said drive (45) enables screwing and unscrewing of the said threaded head screw (40) into the insert nut (10).

6. The kit according to claim 1, where each cylinder head screw (50) is equipped with a drive (55) formed on the top of the head (54), where the said drive (55) enables screwing and unscrewing of the said cylinder head screw (50) into the insert nut (10).

7. The kit according to claim 1, where each screw plug (60) is equipped with a drive (65) formed in the flat head (64), where the said drive (65) enables screwing and unscrewing of the said screw plug (60) into the insert nut (10).

8. The kit according to claim 1, where each socket (400) casing is dimensioned to receive a dedicated 3^{rd} party electric element (300), where the said casing has a set of holes (401, 402, 404, 407) distributed in pairs over it, where:
- screw holes (407) enable the socket (400) to be fastened, via the pair of connecting screws (70) inserted through the said screw holes (407), to the corresponding threaded head screws (40) emerging from the laminated electric circuit (100);
- assembly holes (402) that enable on-top tool manipulation of element inserting levers (420) during the mounting/dismounting of the electric element (300) within the socket (400);
- contact ejecting holes (404) through which the said element inserting levers (420) are ejected or retracted; and
- activating pin holes (401) through which activating pins (410) are protruding in the mechanical contact with the electric element (300);
wherein the electro-mechanical mechanism is composed from activating pins (410), element inserting levers (420), pins (430), contact parts (440) and springs (450);
- where inserting the electric element (300) within the socket (400) engages the activating pins (410) which push springs (450) towards the bottom of the socket (400) and rotate pair of element inserting levers (420), fixed via their pin receiving portions (423) over the corresponding pins (430), causing the element inserting levers (420) to protrude through ejecting holes (404) and enter the electric element contact holes (320) to be fixed into with the electric element screws, where each element inserting lever (420) is in the permanent electric contact, via an elastic contact (444), with the corresponding contact part (440) which is electrically connected to the said threaded head screw (40) using the connecting screw (70), and therefore with the laminated electric circuit (100).

9. Use of the kit according to claims 1-8, for automated or semi-automated assembling or disassembling of the laminated electric circuits (100).

10. Use of the kit according to claim 9, where automated assembling or disassembling of the laminated electric circuits is performed via industrial robots.

## Patentansprüche

1. Kit, der konfiguriert ist, um für die automatisierte Montage oder Demontage von laminierten elektrischen Schaltungen (100) und den damit verbundenen entsprechenden elektrischen Elementen (200, 300) verwendet zu werden;
- wobei die laminierte elektrische Schaltung (100) auf zwei oder mehr Isolierfolien (100.i), i=1, ... n, und einer Vielzahl von Leitungsleitern (80) basiert, welche zwischen jeweils zwei benachbarten Isolierfolien (100.i, 100.i+1) mit optional einem Satz von Isolierabstandshaltern eingelegt sind, die eine Dicke nahe den Leitungsleitern (80) aufweisen, welche zum Verstärken der Struktur auf derselben Schicht angeordnet sind, und wobei die gesamte laminierte elektrische Schaltung (100), sobald sie gebildet ist, mechanisch fest befestigt wird;
- wobei jeder Leitungsleiter (80) zumindest eine Leitung (81) aufweist, welche mit einem Leitungsverbinder (82) ausgestattet ist, welcher eine zentrale Bohrung (86) zum Bilden eines elektrischen Kontakts mit anderen Kit-Elementen aufweist;
- wobei ein oder mehrere elektrische Elemente (200) oder optionale elektrische Elemente (300) von Drittanbietern, welche zuvor in Steckdosen (400) eingeführt werden, auf eine Art und Weise elektrisch und mechanisch mit der laminierten elektrischen Schaltung (100) verbunden werden, dass ihre elektrischen Kontakte über die Kit-Elemente mit den gewünschten Leitungsleitern (80) innerhalb der laminierten elektrischen Schaltung (100) verbunden sind;
wobei der Kit die folgenden Elemente umfasst:
- Steckbrücken (90), wobei jede Steckbrücke (90) eine Steckbrückenleitung (91) beliebiger Breite aufweist, welche mit zwei oder mehr Steckbrücken-Verbindern (92) ausgestattet ist, jeweils mit einer zentralen Bohrung (96) zum Bilden eines elektrischen Kontakts mit weiteren Kit-Elementen (10, 20), welche über dieselbe Schicht verteilt sind;
- Einsteckmuttern (10) zum Aufnehmen kompatibler Kit-Schrauben (40, 50, 60), wobei jede Einsteckmutter (10) eine Kontaktfläche (13) aufweist, welche bemessen ist, um einen Leitungsverbinder (82) oder einen Steckbrücken-Verbinder (92) aufzunehmen;
- Stufenbuchsen (20), wobei jede Stufenbuchse (20) bemessen ist, um mit ihrer Kontaktfläche (23) einen Leitungsverbinder (82) oder einen Steckbrücken-Verbinder (92) aufzunehmen, und mit einer Bohrung (26) für freien Durchgang der Schraube (40, 50, 60);
- Buchsen (30), wobei jede Buchse (30) eine Bohrung (36) für den freien Durchgang der Schraube (40, 50, 60) aufweist;
wobei Einsteckmuttern (10), Stufenbuchsen (20) und Buchsen (30) bei Verwendung an derselben Isolierschicht (100.i) von gleicher Höhe sind, einen oder mehrere Drehanschläge (11, 21, 31) aufweisen, die an ihren Außenflächen (15, 25, 35) gebildet sind, welche konfiguriert sind, um in die entsprechende Isolierschicht (100.i) zu passen und verhindern, dass sich die Kit-Elemente (10, 20, 30) drehen;
- Gewindekopfschrauben (40), wobei jede Gewindekopfschraube (40) ein in dem Kopf (44) gebildetes Gewinde (47) aufweist, um eine Verbindungsschraube (70) aufzunehmen, mit der ein elektrisches Element (200) oder eine Steckdose (400) daran befestigt ist;
- Zylinderkopfschrauben (50), wobei jede Zylinderkopfschraube (50) einen zylindrischen Kopf (54) mit einer Befestigungsnut (59) zur Aufnahme eines Schnappverschlusses (209) des elektrischen Elements (200) aufweist;
wobei jeder Gewindekopfschraubenschaft (41) oder Zylinderkopfschraubenschaft (51) ein Gewinde (47, 57) zum Befestigen der Schraube (40, 50) in der Einsteckmutter (10) aufweist, und die Länge des Schafts (41, 51) bemessen ist, um n, n≥1, Buchsen (20, 30) zwischen der Mutter (10) und einem Kopfanschlag (42, 52) der Gewinde- oder Zylinderkopfschraube (40, 50) aufzunehmen;
- Schraubstopfen (60), wobei jeder Schraubstopfen (60) einen zumindest teilweise mit einem Gewinde versehenen Schaft (61) zum Befestigen des Schraubstopfens (60) in der Einsteckmutter (10) aufweist, und der Schaft (61) bemessen ist, um n, n≥1, Buchsen (20, 30) zwischen der Mutter (10) und einem Flachkopf (64) des Schraubstopfens aufzunehmen;
- Verbindungsschrauben (70), wobei jede Verbindungsschraube (70) einen zumindest teilweise mit Gewinde versehenen Schaft (71) zum Anschrauben der Verbindungsschraube (70) in die Gewindekopfschrauben (40) aufweist; und
- optional eine oder mehrere Steckdosen (400) mit einem elektromechanischen Mechanismus, der zum einfachen Einsetzen und Auswerfen eines elektrischen Elements (300) eines Drittanbieters in die und aus der Steckdose (400) gestaltet ist, wobei es jede Steckdose (400) ermöglicht, dass das Element (300) eine verriegelte mechanische Position und einen guten elektrischen Kontakt mit der laminierten elektrischen Schaltung (100) über Gewindekopfschrauben (40) aufweist, welche die Steckdose (400) und das elektrische Element (300) halten.

2. Kit nach Anspruch 1, wobei die Einsteckmutter (10) konfiguriert ist, um einen elektrischen Kontakt mit dem Leitungs- oder Steckbrücken-Verbinder (82, 92) auf eine Weise zu bilden, dass die Kontaktbohrung (86, 96) die Geometrie aufweist, welche der Außengeometrie des Gewindezylinders (12) entspricht, welcher innerhalb der Einsteckmutter (10) gebildet wird, und wobei der Abstand von der Kontaktfläche (13) zu der Oberseite der Mutter (10) gemäß der Dicke des Leitungs- oder Steckbrücken-Verbinders (82, 92) bemessen ist.

3. Kit nach Anspruch 1, wobei die Stufenbuchse (20) konfiguriert ist, um einen elektrischen Kontakt mit dem Leitungs- oder Steckbrücken-Verbinder (82, 92) auf eine Weise zu bilden, dass die Kontaktbohrung (86, 96) die Geometrie aufweist, welche der Außengeometrie des Zylinders (22) entspricht, welcher innerhalb der Stufenbuchse (20) gebildet wird, und wobei der Abstand von der Kontaktfläche (23) zu der Oberseite der Stufenbuchse (20) gemäß der Dicke des Leitungs- oder Steckbrücken-Verbinders (82, 92) bemessen ist.

4. Kit nach Anspruch 2 oder 3, wobei alle Stufenbuchsen (20) und Buchsen (30) dieselbe Höhe aufweisen, und wobei jede Kontaktbohrung (86, 96) eine kreisförmige Geometrie aufweist.

5. Kit nach Anspruch 1, wobei jede Gewindekopfschraube (40) mit einem Antrieb (45) ausgestattet ist, welcher auf der Oberseite des Kopfes (44) gebildet wird, welcher in dem Kopf (44) ein bearbeitetes Gewinde (47) aufweist, wobei der Antrieb (45) Anschrauben und Abschrauben der Gewindekopfschraube (10) in der Einsteckmutter (40) ermöglicht.

6. Kit nach Anspruch 1, wobei jede Zylinderkopfschraube (50) mit einem Antrieb (55) ausgestattet ist, welcher auf der Oberseite des Kopfes (54) gebildet wird, wobei der Antrieb (55) Anschrauben und Abschrauben der Zylinderkopfschraube (10) in der Einsteckmutter (50) ermöglicht.

7. Kit nach Anspruch 1, wobei jeder Schraubstopfen (60) mit einem Antrieb (65) ausgestattet ist, welcher in dem Flachkopf (64) gebildet wird, wobei der Antrieb (65) Anschrauben und Abschrauben des Schraubstopfens (60) in der Einsteckmutter (10) ermöglicht.

8. Kit nach Anspruch 1, wobei das Gehäuse jeder Steckdose (400) bemessen ist, um ein bestimmtes elektrisches Element (300) eines Drittanbieters aufzunehmen, wobei das Gehäuse einen Satz an Löchern (401, 402, 404, 407) aufweist, welche paarweise darüber verteilt sind, wobei:
- Schraubenlöcher (407) ermöglichen, dass die Steckdose (400) über das Paar Verbindungsschrauben (70), welche durch die Schraubenlöcher (407) eingeführt werden, an den entsprechenden aus der laminierten elektrischen Schaltung (100) heraustretenden Gewindekopfschrauben (40) befestigt wird;
- Montagelöcher (402), welche die Handhabung von Element-Einführhebeln (420) von oben mit einem Werkzeug bei der Montage/Demontage des elektrischen Elements (300) innerhalb der Steckdose (400) ermöglichen;
- Kontaktauswurflöcher (404), durch welche die Element-Einführhebel (420) ausgeworfen oder zurückgezogen werden; und
- Aktivierungsstiftlöcher (401), durch welche Aktivierungsstifte (410) in dem mechanischen Kontakt mit dem elektrischen Element (300) hervorstehen;
wobei der elektromechanische Mechanismus aus Aktivierungsstiften (410), Element-Einführhebeln (420), Stiften (430), Kontaktteilen (440) und Federn (450) zusammengesetzt ist;
- wobei beim Einsetzen des elektrischen Elements (300) innerhalb der Steckdose (400) die Aktivierungsstifte (410) in Eingriff kommen, welche Federn (450) in Richtung des Bodens der Steckdose (400) drücken und ein Paar Element-Einführhebel (420) drehen, welche über ihre Stiftaufnahmeabschnitte (423) über den entsprechenden Stiften (430) fixiert sind, wodurch veranlasst wird, dass die Element-Einführhebel (420) durch die Auswurflöcher (404) vorstehen und in die Kontaktlöcher (320) des elektrischen Elements eintreten, um mit den Schrauben des elektrischen Elements fixiert zu werden, wobei jeder Element-Einführhebel (420) über einen elastischen Kontakt (444) in ständigem elektrischem Kontakt mit dem entsprechenden Kontaktteil (440) steht, welches unter Verwendung der Verbindungsschraube (70) elektrisch mit der Gewindekopfschraube (40) und dadurch mit der laminierten elektrischen Schaltung (100) verbunden ist.

9. Verwendung des Kits nach den Ansprüchen 1-8 zur automatisierten oder halbautomatisierten Montage oder Demontage der laminierten elektrischen Schaltungen (100).

10. Verwendung des Kits nach Anspruch 9, wobei die automatisierte Montage oder Demontage der laminierten elektrischen Schaltungen durch Industrieroboter durchgeführt wird.

## Revendications

1. Kit configuré pour être utilisé pour un assemblage ou un démontage automatisé de circuits électriques stratifiés (100) et des éléments électriques correspondants (200, 300) raccordés à ceux-ci ;
- dans lequel ledit circuit électrique stratifié (100) est basé sur deux, ou plus, feuilles isolantes (100.i), i = 1, ... n, et une pluralité de conducteurs de ligne (80) pris en sandwich entre chacune de deux feuilles isolantes adjacentes (100.i, 100.i + 1) avec, facultativement, un ensemble d'entretoises isolantes présentant une épaisseur proche desdits conducteurs de ligne (80) situées sur la même couche pour renforcer la structure, et dans lequel l'ensemble du circuit électrique stratifié (100) est fixé mécaniquement de manière serrée une fois qu'il est formé ;
- dans lequel chaque conducteur de ligne (80) présente au moins une ligne (81) équipée d'un connecteur de ligne (82) présentant un alésage central (86) pour former un contact électrique avec d'autres éléments de kit ;
- dans lequel un ou plusieurs éléments électriques (200), ou des éléments électriques^{tiers} facultatifs (300) qui sont auparavant insérés dans des prises (400), sont raccordés électriquement et mécaniquement audit circuit électrique stratifié (100) de telle manière que leurs contacts électriques soient raccordés par le biais desdits éléments de kit aux conducteurs de ligne souhaités (80) à l'intérieur dudit circuit électrique stratifié (100) ;
dans lequel ledit kit comprend les éléments suivants :
- des cavaliers (90), dans lequel chaque cavalier (90) présente une ligne de cavalier (91) de largeur arbitraire, équipée de deux, ou plus, connecteurs de cavalier (92), chacun avec un alésage central (96) pour former un contact électrique avec d'autres éléments de kit (10, 20) répartis sur la même couche ;
- des écrous d'insertion (10) pour recevoir des vis (40, 50, 60) du kit compatibles, dans lequel chaque écrou d'insertion (10) présente une surface de contact (13) dimensionnée pour recevoir un connecteur de ligne (82) ou un connecteur de cavalier (92) ;
- des douilles étagées (20), dans lequel chaque douille étagée (20) est dimensionnée pour recevoir un connecteur de ligne (82) ou un connecteur de cavalier (92) avec sa surface de contact (23), et avec un alésage (26) pour un passage libre de vis (40, 50, 60) ;
- des douilles (30), dans lequel chaque douille (30) présente un alésage (36) pour un passage libre de vis (40, 50, 60) ;
dans lequel des écrous d'insertion (10), des douilles étagées (20) et des douilles (30) sont de la même hauteur lorsqu'ils sont utilisés sur la même couche isolante (100.i), présentant une ou plusieurs butées de rotation (11, 21, 31) formées sur leurs surfaces externes (15, 25, 35) qui sont configurées pour s'emboîter dans la couche isolante correspondante (100.i) et empêcher les éléments de kit (10, 20, 30) de tourner ;
- des vis à tête filetée (40), dans lequel chaque vis à tête filetée (40) présente un filetage (47) formé dans la tête (44) pour recevoir une vis de connexion (70) au moyen de laquelle un élément électrique (200) est fixé, ou une prise (400) est fixée, à celle-ci ;
- des vis à tête cylindrique (50), dans lequel chaque vis à tête cylindrique (50) présente une tête cylindrique (54) avec une rainure de fixation (59) pour recevoir un bouton à pression (209) de l'élément électrique (200) ;
dans lequel chaque tige de vis à tête filetée (41) ou tige de vis à tête cylindrique (51) présente un filetage (47, 57) pour fixer ladite vis (40, 50) dans l'écrou d'insertion (10) et avec la longueur de ladite tige ( 41, 51) dimensionnée pour recevoir n, n ≥ 1, douilles (20, 30) entre l'écrou (10) et une butée de tête (42, 52) de ladite vis à tête filetée ou à tête cylindrique (40, 50) ;
- des bouchons à vis (60), dans lequel chaque bouchon à vis (60) présente une tige au moins partiellement filetée (61) pour fixer ledit bouchon à vis (60) dans ledit écrou d'insertion (10) et la tige (61) dimensionnée pour recevoir n, n ≥ 1, douilles (20, 30) entre l'écrou (10) et une tête plate (64) du bouchon à vis ;
- des vis de connexion (70), dans lequel chaque vis de connexion (70) présente une tige au moins partiellement filetée (71) pour visser ladite vis de connexion (70) dans les vis à tête filetée (40) ; et
- facultativement, une ou plusieurs prises (400) avec un mécanisme électromécanique conçu pour insérer et éjecter facilement un élément électrique tiers (300) de ladite prise (400), dans lequel chaque prise (400) permet que l'élément électrique (300) présente une position mécanique verrouillée et un bon contact électrique avec le circuit électrique stratifié (100) par le biais de vis à tête filetée (40) qui maintiennent ladite prise (400) et ledit élément électrique (300).

2. Kit selon la revendication 1, dans lequel l'écrou d'insertion (10) est configuré pour former un contact électrique avec le connecteur de ligne ou de cavalier (82, 92) de telle manière que l'alésage de contact (86, 96) présente la géométrie qui correspond à la géométrie externe du cylindre fileté (12) formé à l'intérieur de l'écrou d'insertion (10), et dans lequel la distance entre la surface de contact (13) et le sommet de l'écrou (10) est dimensionnée en fonction de l'épaisseur du connecteur de ligne ou de cavalier (82, 92).

3. Kit selon la revendication 1, dans lequel la douille étagée (20) est configurée pour former un contact électrique avec le connecteur de ligne ou de cavalier (82, 92) de telle manière que l'alésage de contact (86, 96) présente la géométrie qui correspond à la géométrie externe du cylindre (22) formé à l'intérieur de la douille étagée (20) et dans lequel la distance entre la surface de contact (23) et le sommet de la douille étagée (20) est dimensionnée en fonction de l'épaisseur du connecteur de ligne ou de cavalier (82, 92).

4. Kit selon la revendication 2 ou 3, dans lequel toutes les douilles étagées (20) et les douilles (30) présentent la même hauteur et dans lequel chaque alésage de contact (86, 96) présente une géométrie circulaire.

5. Kit selon la revendication 1, dans lequel chaque vis à tête filetée (40) est équipée d'un entraînement (45) formé sur le sommet de la tête (44) qui présente un filetage usiné (47) dans ladite tête (44), dans lequel ledit entraînement (45) permet un vissage et un dévissage de ladite vis à tête filetée (40) dans l'écrou d'insertion (10).

6. Kit selon la revendication 1, dans lequel chaque vis à tête cylindrique (50) est équipée d'un entraînement (55) formé sur le sommet de la tête (54), dans lequel ledit entraînement (55) permet un vissage et un dévissage de ladite vis à tête cylindrique (50) dans l'écrou d'insertion (10).

7. Kit selon la revendication 1, dans lequel chaque bouchon à vis (60) est équipé d'un entraînement (65) formé dans la tête plate (64), dans lequel ledit entraînement (65) permet un vissage et un dévissage dudit bouchon à vis (60) dans l'écrou d'insertion (10).

8. Kit selon la revendication 1, dans lequel chaque boîtier de prise (400) est dimensionné pour recevoir un élément électrique tiers dédié (300), dans lequel ledit boîtier présente un ensemble de trous (401, 402, 404, 407) répartis par paires sur celuici, dans lequel :
- des trous de vis (407) permettent à la prise (400) d'être fixée, par le biais de la paire de vis de connexion (70) insérées à travers lesdits trous de vis (407), aux vis à tête filetée correspondantes (40) émergeant du circuit électrique stratifié (100) ;
- des trous d'assemblage (402) qui permettent une manipulation d'outil sur le dessus de leviers d'insertion d'élément (420) pendant l'assemblage/le démontage de l'élément électrique (300) à l'intérieur de la prise (400) ;
- des trous d'éjection de contact (404) à travers lesquels lesdits leviers d'insertion d'élément (420) sont éjectés ou rétractés ; et
- des trous de broche d'activation (401) à travers lesquels des broches d'activation (410) font saillie dans le contact mécanique avec l'élément électrique (300) ;
dans lequel le mécanisme électromécanique est composé de broches d'activation (410), de leviers d'insertion d'élément (420), de broches (430), de pièces de contact (440) et de ressorts (450) ;
- dans lequel l'insertion de l'élément électrique (300) dans la prise (400) met en prise les broches d'activation (410) qui poussent des ressorts (450) vers le bas de la prise (400) et font tourner une paire de leviers d'insertion d'élément (420), fixés par le biais de leurs parties de réception de broche (423) sur les broches correspondantes (430), amenant les leviers d'insertion d'élément (420) à faire saillie à travers des trous d'éjection (404) et à entrer dans les trous de contact d'élément électrique (320) pour y être fixés avec les vis d'élément électrique, dans lequel chaque levier d'insertion d'élément (420) est en contact électrique permanent, par le biais d'un contact élastique (444), avec la pièce de contact correspondante (440) qui est raccordée électriquement à ladite vis à tête filetée (40) à l'aide de la vis de connexion (70) et, par conséquent, avec le circuit électrique stratifié (100).

9. Utilisation du kit selon les revendications 1-8, pour un assemblage ou un démontage automatisé ou semi-automatique des circuits électriques stratifiés (100).

10. Utilisation du kit selon la revendication 9, dans laquelle un assemblage ou un démontage automatisé des circuits électriques stratifiés est effectué par le biais de robots industriels.
